(19) Europäisches Patentamt
European Patent Office
Office européen des brevets

(11) Veröffentlichungsnummer: **0 468 922 B1**

# (12) EUROPÄISCHE PATENTSCHRIFT

(45) Veröffentlichungstag der Patentschrift: **15.11.95**

(51) Int. Cl.⁶: **D06P 3/32**, C09B 62/09, C09B 43/16, C09B 33/052

(21) Anmeldenummer: **91810575.0**

(22) Anmeldetag: **16.07.91**

## (54) Verwendung von Polyazofarbstoffen zum Färben von Leder.

(30) Priorität: **24.07.90 CH 2454/90**

(43) Veröffentlichungstag der Anmeldung: **29.01.92 Patentblatt 92/05**

(45) Bekanntmachung des Hinweises auf die Patenterteilung: **15.11.95 Patentblatt 95/46**

(84) Benannte Vertragsstaaten: **BE CH DE ES FR GB IT LI**

(56) Entgegenhaltungen:
**DE-A- 3 440 777**
**GB-A- 2 007 250**

**CHEMICAL ABSTRACTS, vol. 95, no. 8, 24. August 1981, Columbus, Ohio, US; abstract no. 63664, 'Disazo dyes' Seite 72 ;Spalte L**

**CHEMICAL ABSTRACTS, vol. 108, no. 14, 4. April 1988, Columbus, Ohio, abstract no. 114199, HIBARA, TOSHIO:"Reactive disazo dyes", Seite 91, Spalte L**

**CHEMICAL ABSTRACTS, vol. 111, no. 26, 25. Dezember 1989, Columbus, Ohio, US; abstract no. 235001, HIMENO, KIYOSHI ; HIBARA, TOSHIO: 'Disazo compounds for dyeing cellulosic fibers'**

(73) Patentinhaber: **CIBA-GEIGY AG**
**Klybeckstrasse 141**
**CH-4002 Basel (CH)**

(72) Erfinder: **Schaulin, Rudolf, Dr.**
**Schäferstrasse 62**
**CH-4125 Riehen (CH)**
Erfinder: **Moser, Peter, Dr.**
**Waldeckweg 4**
**CH-4102 Binningen (CH)**
Erfinder: **Püntener, Alois, Dr.**
**Pulverweg 13**
**CH-4310 Rheinfelden (CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 468 922 B1

**Beschreibung**

Die vorliegende Erfindung betrifft die Verwendung von spezifischen Polyazofarbstoffen zum Färben von Leder.

Gegenstand der vorliegenden Erfindung ist daher die Verwendung von Verbindungen der Formel

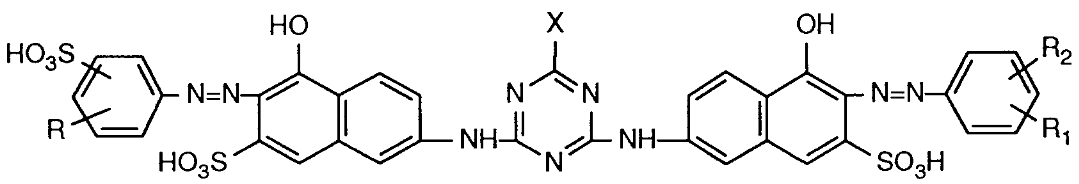

(1),

worin R und $R_1$ unabhängig voneinander Wasserstoff, $C_1$-$C_4$-Alkyl, $C_1$-$C_4$-Alkoxy, gegebenenfalls substituiertes $C_2$-$C_4$-Alkanoylamino oder gegebenenfalls substituiertes Benzoylamino bedeuten, $R_2$ Wasserstoff oder Sulfo ist und X für Hydroxy, $C_1$-$C_4$-Alkoxy, $C_1$-$C_4$-Alkylthio, Amino, Cyclohexylamino, Morpholino, Halogen oder gegebenenfalls substituiertes Phenylamino oder N-$C_1$-$C_4$-Alkyl-N-phenylamino steht, zum Färben von Leder.

Handelt es sich bei R, $R_1$ oder einer der weiter unten genannten Variablen um $C_1$-$C_4$-Alkyl, so ist darunter Methyl, Ethyl, n- oder iso-Propyl oder n-, iso-, sec.- oder tert.-Butyl, vorzugsweise Methyl oder Ethyl und insbesondere bevorzugt Methyl, zu verstehen.

Stehen R, $R_1$ oder eine der weiter unten genannten Vanablen für $C_1$-$C_4$-Alkoxy, so handelt es sich generell um Methoxy, Ethoxy, n- oder iso-Propoxy oder n-, iso-, sec.- oder tert.-Butoxy.

R und $R_1$ stehen als $C_1$-$C_4$-Alkoxy unabhängig voneinander bevorzugt je für Methoxy oder Ethoxy und besonders bevorzugt für Methoxy.

Bei R und/oder $R_1$ als gegebenenfalls substituiertem $C_2$-$C_4$-Alkanoylamino handelt es sich z.B. um unsubstituiertes oder z.B. durch Hydroxy substituiertes Acetylamino, Propionylamino oder n- oder iso-Butyrylamino, vorzugsweise um Acetylamino, Hydroxyacetylamino oder Propionylamino und besonders bevorzugt um Acetylamino.

Stehen R und/oder $R_1$ für gegebenenfalls substituiertes Benzoylamino, so kommt z.B. unsubstituiertes oder durch Methyl, Methoxy, Chlor, Sulfamoyl und/oder Sulfo substituiertes Benzoylamino und vorzugsweise unsubstituiertes Benzoylamino in Frage.

R und $R_1$ bedeuten unabhängig voneinander bevorzugt je Wasserstoff, Methyl, Ethyl, Methoxy, Ethoxy, Acetylamino, Hydroxyacetylamino, Propionylamino oder Benzoylamino und besonders bevorzugt je Methyl, Methoxy, Ethoxy, Acetylamino, Propionylamino oder Benzoylamino. Die Reste R und $R_1$ können verschieden oder vorzugsweise identisch sein.

Besonders bevorzugt stehen R und $R_1$ je für Acetylamino oder Methoxy und insbesondere bevorzugt je für Methoxy.

$R_2$ bedeutet bevorzugt Sulfo.

Bei X als Halogen handelt es sich z.B. um Fluor, Brom und insbesondere um Chlor.

Steht X für einen Phenylamino- oder N-$C_1$-$C_4$-Alkyl-N-phenylaminorest, so kommt hierbei z.B. ein unsubstituierter oder im Phenylteil z.B. durch $C_1$-$C_4$-Alkyl, $C_1$-$C_4$-Alkoxy, Carboxy, Sulfo, Sulfamoyl, N-Mono- oder N,N-Di-$C_1$-$C_4$-Alkylsulfamoyl und/oder Halogen substituierter Phenylamino- oder N-$C_1$-$C_4$-Alkyl-N-phenylaminorest in Frage.

Beispiele für geeignete Phenylaminoreste X sind Phenylamino, o-, m- oder p-Methylphenylamino, o-, m- oder p-Methoxyphenylamino, o-, m- oder p-Chlorphenylamino, 3,4-Dichlorphenylamino, o-, m- oder p-Sulfophenylamino, oder in o-, m- oder p-Stellung durch Sulfamoyl, N-Methylsulfamoyl, N-Ethylsulfamoyl, N,N-Dimethylsulfamoyl oder N,N-Diethylsulfamoyl substituiertes Phenylamino.

Bei X als Phenylaminorest handelt es sich bevorzugt um einen unsubstituierten oder z.B. durch Methyl, Methoxy, Chlor, Sulfamoyl und/oder Sulfo substituierten Phenylaminorest.

Bedeutet X einen gegebenenfalls substituierten N-$C_1$-$C_4$-Alkyl-N-phenylaminorest, handelt es sich vorzugsweise um einen unsubstituierten N-$C_1$-$C_4$-Alkyl-N-phenylaminorest und besonders bevorzugt um den N-Methyl- oder N-Ethyl-N-phenylaminorest.

Bevorzugte $C_1$-$C_4$-Alkoxyreste X sind Methoxy, Ethoxy oder n- oder iso-Propoxy.

Bei X als $C_1$-$C_4$-Alkylthio handelt es sich bevorzugt um Methylthio oder Ethylthio.

Beispiele für brauchbare Substituenten X sind somit Hydroxy, Methoxy, Ethoxy, n- oder iso-Propoxy, Chlor, Methylthio, Ethylthio, Amino, Phenylamino, o-, m- oder p-Methoxyphenylamino, o-, m- oder p-Methylphenylamino, o-, m- oder p-Sulfophenylamino, o-, m- oder p- Chlorphenylamino, 3,4-Dichlorphenylamino, N-Ethyl-N-phenylamino, N-Methyl-N-phenylamino oder Morpholino.

In einer bevorzugten Ausführungsform der vorliegenden Erfindung verwendet man Verbindungen der zuvor angegebenen Formel (1), worin X Hydroxy, Chlor, Amino, Phenylamino, o-, m- oder p-Methoxyphenylamino, o-, m- oder p-Methylphenylamino, o-, m- oder p-Sulfophenylamino, o-, m- oder p- Chlorphenylamino oder 3,4-Dichlorphenylamino bedeutet.

X steht besonders bevorzugt für Chlor, Phenylamino oder o-, m- oder p-Methoxyphenylamino.

Von besonderem Interesse ist die Verwendung von Verbindungen der Formel

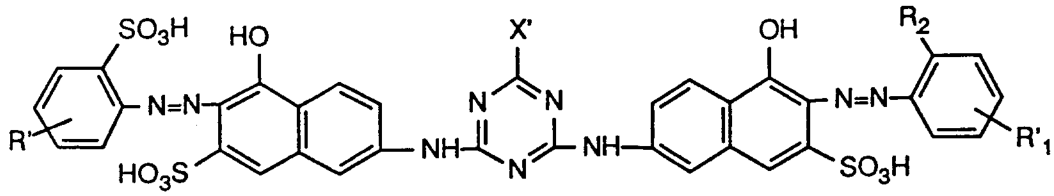

(1a),

worin R' und $R'_1$ unabhängig voneinander je Wasserstoff, Methyl, Ethyl, Methoxy, Ethoxy, Acetylamino, Hydroxyacetylamino, Propionylamino oder Benzoylamino bedeuten, $R_2$ Wasserstoff oder Sulfo ist und X' für Hydroxy, Chlor, Amino, Phenylamino, o-, m- oder p-Methoxyphenylamino, o-, m- oder p-Methylphenylamino, o-, m- oder p-Sulfophenylamino, o-, m- oder p- Chlorphenylamino oder 3,4-Dichlorphenylamino steht.

Von ganz besonderem Interesse ist die Verwendung von Verbindungen der Formel

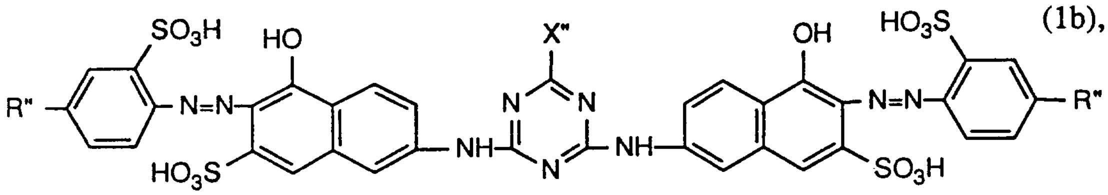

(1b),

worin R" Methyl, Methoxy, Ethoxy, Acetylamino, Propionylamino oder Benzoylamino und X" Chlor, Phenylamino oder o-, m- oder p-Methoxyphenylamino bedeuten.

Die Verbindungen der Formel (1) sind zum Teil bekannt und können in an sich bekannter Weise, z.B. indem man eine Verbindung der Formel

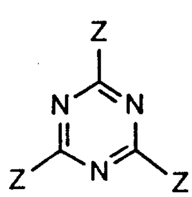

(2),

worin Z Halogen und vorzugsweise Chlor bedeutet, nacheinander in beliebiger Reihenfolge mit einer Verbindung der Formel

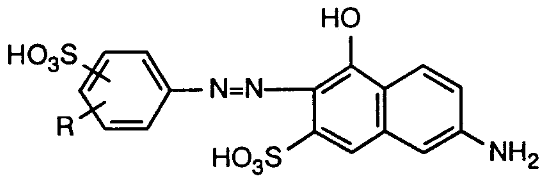

(3)

und einer Verbindung der Formel

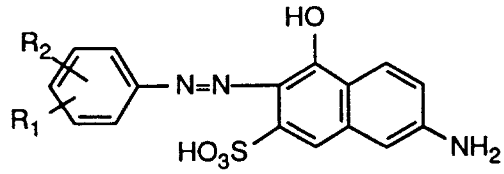

(4),

worin R, $R_1$ und $R_2$ jeweils die zuvor angegebene Bedeutung haben, umsetzt und das verbleibende Halogenatom Z gegebenenfalls durch einen der zuvor genannten Reste X ersetzt, erhalten werden. Handelt es sich bei den Verbindungen der Formel (3) und (4) um identische Aminoazoverbindungen, so setzt man vorteilhaft ca. 2 Aequivalente dieser Verbindung mit 1 Aequivalent Triazinverbindung der Formel (2) um.

Die Verbindungen der Formel (1), worin X einen gegebenenfalls substituierten Phenylaminorest bedeutet, sind neu und stellen einen weiteren Gegenstand der Erfindung dar.

Die erfindungsgemässen Verbindungen der Formel (1) eignen sich zum Färben von Pelzen und insbesondere von Leder, wobei alle Ledersorten, z.B. Chromleder, nachgegerbte Leder oder Veloursleder von Ziege, Schaf, Rind und Schwein, geeignet sind.

Das Färben erfolgt vorzugsweise nach dem Ausziehverfahren, z.B. bei einem Flottenverhältnis von 1:1,5 bis 1:20, vorzugsweise 1:2 bis 1:10, und bei Temperaturen von 20 bis 100 °C, vorzugsweise 40 bis 60 °C. Falls erwünscht oder erforderlich, kann das Leder einer Vorbehandlung unterworfen werden, beispielsweise einer Neutralisation und/oder Walke.

Die Färbedauer schwankt je nach Art des Leders und der gewünschten Farbtiefe, liegt im allgemeinen jedoch zwischen 45 und 180 Minuten. Im Anschluss an die Färbung wird das Leder gespült und wie üblich fertiggestellt.

Man erhält brillante rote Färbungen mit guten Allgemeinechtheiten, wie Diffusions-, Licht-, Säure- und Alkaliechtheit. Die Färbungen der Verbindungen der Formel (1) weisen ein gutes Ziehvermögen, eine gute Säure- und Alkalistabilität und eine gute Elektrolytbeständigkeit auf. Besondere Erwähnung verdient das gute Aufbauvermögen auf verschiedensten Ledersorten wie Reinchromleder und besonders nachgegerbtem Leder sowie die Konstanz der Nuance auf verschiedenen Ledersorten.

Die GB-A-2007250 beschreibt Disazofarbstoffe mit einer N-hydroxyethylamino- oder N,N-dihydroxyethylamino-Gruppe am Triazinkern, die vor allem zum Färben von Cellulosematerial geeignet sind und aus Chemical Abstracts, Vol. 111 (1989), 235001a sind bereits kationische Disazofarbstoffe zum Färben von Cellulosefasern bekannt.

Die nachfolgenden Beispiele dienen der Erläuterung der Erfindung, ohne sie darauf zu beschränken. Teile bedeuten Gewichtsteile und Prozente Gewichtsprozente.

Beispiel 1: 100 Teile Bekleidungsveloursleder werden bei 50 °C in einer Lösung von 1000 Teilen Wasser und 2 Teilen 24%igem Ammoniak während 2 Stunden aufgewalkt und anschliessend bei 60 °C in einer Lösung von 1000 Teilen Wasser, 2 Teilen 24%igem Ammoniak und 3 Teilen Farbstoff der Formel

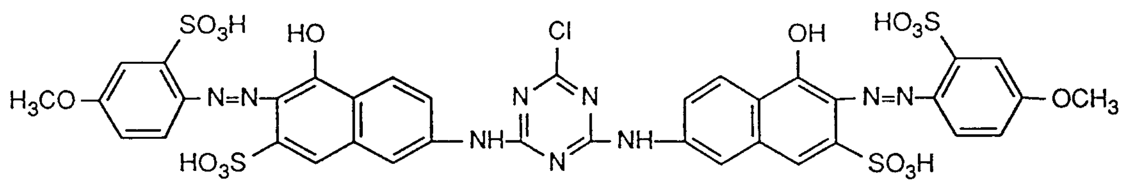

während 1 Stunde gefärbt. Hierauf gibt man eine Lösung von 40 Teilen Wasser und 4 Teilen 85%iger Ameisensäure zu und färbt noch weitere 30 Minuten. Dann werden die Leder gut gespült und gegebenenfalls noch mit 2 Teilen eines Dicyandiaminoformaldehydkondensationsproduktes während 30 Minuten bei 50 ° C behandelt Man erhält eine brillante rote Färbung mit guten Echtheiten.

Beispiel 2: 100 Teile Chromrindleder werden in einer aus 200 Teilen Wasser, 1 Teil Natriumbicarbonat sowie 1 Teil Natriumformiat bestehenden Flotte während 45 Minuten bei 30 ° C gewalkt und dann 2 mal mit 300 Teilen Wasser bei der gleichen Temperatur gewaschen. Das solchermassen neutralisierte oder wird 60 Minuten bei 30 ° C in einer Flotte, bestehend aus 300 Teilen Wasser und 6 % eines synthetischen Nachgerbstoffes (Formaldehyd-Kondensationsprodukt von phenolischen Sulfosäuren) behandelt. Danach wird das neutralisierte und nachgegerbte Leder in einer frischen Flotte enthaltend 300 Teile Wasser und 2 Teile Farbstoff der Formel

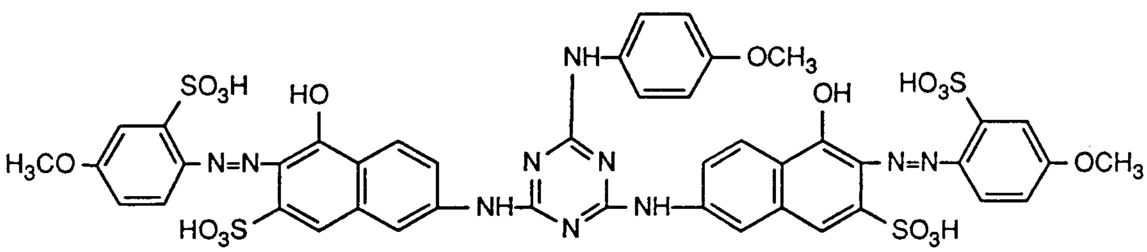

bei 50 ° C gefärbt. Nach einer Färbedauer von 30 Minuten erfolgt der Zusatz von 3 % eines synthetischen Fettungsmittels und nach weiteren 30 Minuten die Zugabe von 1 Teil Ameisensäure 85%ig. Nach dem Ansäuren wird die Behandlung 20 Minuten bei 50 ° C fortgesetzt, dann in kaltem Wasser gespült und wie üblich fertiggestellt.

Man erhält eine brillante rote Färbung mit guten Allgemeinechtheiten.

Beispiele 3 bis 30: Verfährt man wie in den Beispielen 1 oder 2 beschrieben und verwendet äquivalente Mengen der in der Tabelle 1 aufgeführten Farbstoffe der allgemeinen Formel

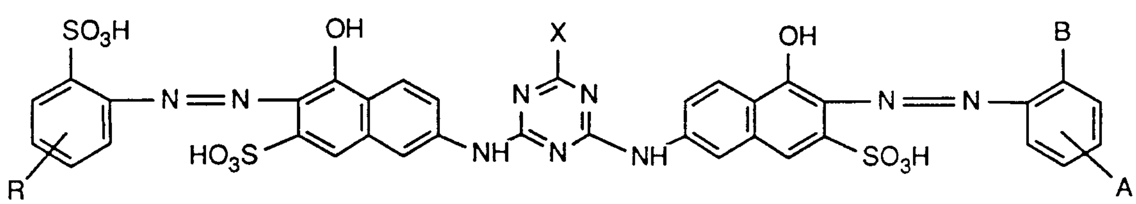

erhält man jeweils brillante gelbstichig rote Färbungen mit guten Allgemeinechtheiten.

Tabelle 1:

| Beispiel Nr. | R | A | B | X |
|---|---|---|---|---|
| 3 | 4 - $OCH_3$ | 4 - $OCH_3$ | $SO_3H$ | F |
| 4 | 4 - $OCH_3$ | 4 - $OCH_3$ | $SO_3H$ | OH |
| 5 | 4 - $OCH_3$ | 4 - $OCH_3$ | $SO_3H$ | $NH_2$ |
| 6 | 4 - $OCH_3$ | 4 - $OCH_3$ | $SO_3H$ | 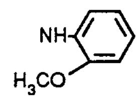 |
| 7 | 4 - $OCH_3$ | 4 - $OCH_3$ | $SO_3H$ | 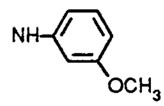 |
| 8 | 4 - $OCH_3$ | 4 - $OCH_3$ | $SO_3H$ | 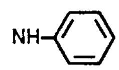 |
| 9 | 4 - $OCH_3$ | 4 - $OCH_3$ | $SO_3H$ | 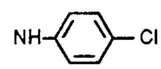 |
| 10 | 4 - $OCH_3$ | 4 - $OCH_3$ | $SO_3H$ | 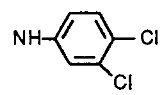 |
| 11 | 4 - $OCH_3$ | 4 - $OCH_3$ | $SO_3H$ | 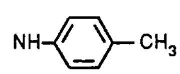 |
| 12 | 4 - $OCH_3$ | 4 - $OCH_3$ | $SO_3H$ | 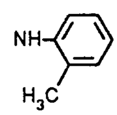 |
| 13 | 4-$NHCOCH_3$ | 4-$NHCOCH_3$ | $SO_3H$ | Cl |
| 14 | 4-$NHCOCH_3$ | 4-$NHCOCH_3$ | $SO_3H$ | 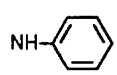 |
| 15 | 4-$NHCOCH_3$ | 4-$NHCOCH_3$ | $SO_3H$ | 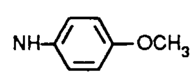 |
| 16 | 4-$NHCOCH_3$ | 4-$NHCOCH_3$ | $SO_3H$ | 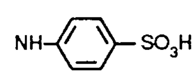 |
| 17 | 4-$NHCOC_2H_5$ | 4-$NHCOC_2H_5$ | $SO_3H$ | Cl |

Tabelle 1 (Fortsetzung):

| Beispiel Nr. | R | A | B | X |
|---|---|---|---|---|
| 18 | 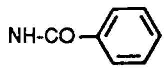 | 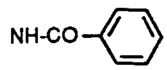 | $SO_3H$ | Cl |
| 19 | 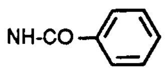 | 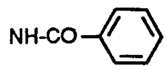 | $SO_3H$ | 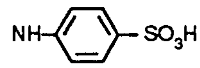 |
| 20 | 4 - $CH_3$ | 4 - $CH_3$ | $SO_3H$ | Cl |
| 21 | 4 - $CH_3$ | 4 - $CH_3$ | $SO_3H$ | 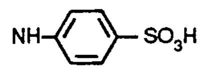 |
| 22 | 4 - $CH_3$ | 4 - $CH_3$ | $SO_3H$ | 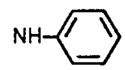 |
| 23 | 4 - $OC_2H_5$ | 4 - $OC_2H_5$ | $SO_3H$ | 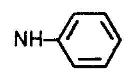 |
| 24 | 4 - $OC_2H_5$ | 4 - $OC_2H_5$ | $SO_3H$ | Cl |
| 25 | 4 - $OCH_3$ | H | $OCH_3$ | Cl |
| 26 | 4 - $OCH_3$ | H | $OCH_3$ | 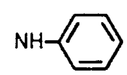 |
| 27 | 4 - $OCH_3$ | H | $SO_3H$ | 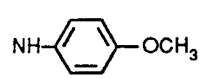 |
| 28 | 4 - $OCH_3$ | 4 - $CH_3$ | $SO_3H$ | Cl |
| 29 | 4 - $CH_3$ | H | $SO_3H$ | Cl |
| 30 | 4 - $OCH_3$ | H | $SO_3H$ | Cl |

**Patentansprüche**

1. Verwendung von Verbindungen der Formel

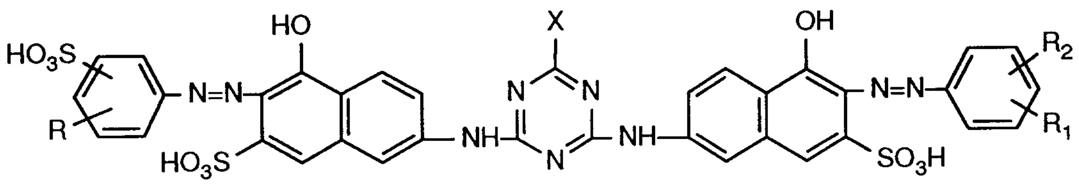

(1),

worin R und $R_1$ unabhängig voneinander Wasserstoff, $C_1$-$C_4$-Alkyl, $C_1$-$C_4$-Alkoxy, gegebenenfalls substituiertes $C_2$-$C_4$-Alkanoylamino oder gegebenenfalls substituiertes Benzoylamino bedeuten, $R_2$ Wasserstoff oder Sulfo ist und X für Hydroxy, $C_1$-$C_4$-Alkoxy, $C_1$-$C_4$-Alkylthio, Amino, Cyclohexylamino, Morpholino, Halogen oder gegebenenfalls substituiertes Phenylamino oder N-$C_1$-$C_4$-Alkyl-N-phenylamino steht, zum Färben von Leder.

2. Verwendung gemäss Anspruch 1, dadurch gekennzeichnet, dass R und $R_1$ unabhängig voneinander jeweils Wasserstoff, $C_1$-$C_4$-Alkoxy, Methyl, Ethyl, unsubstituiertes oder durch Hydroxy substituiertes Acetylamino, Propionylamino oder n- oder iso-Butyrylamino, oder unsubstituiertes oder durch Methyl, Methoxy, Chlor, Sulfamoyl und/oder Sulfo substituiertes Benzoylamino bedeuten.

3. Verwendung gemäss Anspruch 1 oder 2, dadurch gekennzeichnet, dass R und $R_1$ unabhängig voneinander je Wasserstoff, Methyl, Ethyl, Methoxy, Ethoxy, Acetylamino, Hydroxyacetylamino, Propionylamino oder Benzoylamino bedeuten.

4. Verwendung gemäss einem der Ansprüche 1 bis 3,dadurch gekennzeichnet, dass R und $R_1$ je Methyl, Methoxy, Ethoxy, Acetylamino, Propionylamino oder Benzoylamino bedeuten.

5. Verwendung gemäss einem der Ansprüche 1 bis 4, dadurch gekennzeichnet, dass R und $R_1$ jeweils Acetylamino oder Methoxy bedeuten.

6. Verwendung gemäss einem der Ansprüche 1 bis 5, dadurch gekennzeichnet, dass R und $R_1$ jeweils Methoxy sind.

7. Verwendung gemäss einem der Ansprüche 1 bis 6, dadurch gekennzeichnet, dass X Fluor, Chlor, Brom, unsubstituiertes oder im Phenylteil durch $C_1$-$C_4$-Alkyl, $C_1$-$C_4$-Alkoxy, Carboxy, Sulfo, Sulfamoyl, N-Mono- oder N,N-Di-$C_1$-$C_4$-Alkylsulfamoyl und/oder Halogen substituiertes Phenylamino oder N-$C_1$-$C_4$-Alkyl-N-phenylamino, Hydroxy, Methoxy, Ethoxy, n- oder iso-Propoxy, Methylthio, Ethylthio, Amino oder Morpholino bedeutet.

8. Verwendung gemäss einem der Ansprüche 1 bis 6, dadurch gekennzeichnet, dass X Hydroxy, Methoxy, Ethoxy, n- oder iso-Propoxy, Chlor, Methylthio, Ethylthio, Amino, Phenylamino, o-, m- oder p-Methoxyphenylamino, o-, m- oder p-Methylphenylamino, o-, m- oder p-Sulfophenylamino, o-, m- oder p- Chlorphenylamino, 3,4-Dichlorphenylamino, N-Ethyl-N-phenylamino, N-Methyl-N-phenylamino oder Morpholino bedeutet.

9. Verwendung gemäss einem der Ansprüche 1 bis 6, dadurch gekennzeichnet, dass X Hydroxy, Chlor, Amino, Phenylamino, o-, m- oder p-Methoxyphenylamino, o-, m- oder p-Methylphenylamino, o-, m- oder p-Sulfophenylamino, o-, m- oder p- Chlorphenylamino oder 3,4-Dichlorphenylamino bedeutet.

10. Verwendung gemäss einem der Ansprüche 1 bis 6, dadurch gekennzeichnet, dass X Chlor, Phenylamino oder o-, m- oder p-Methoxyphenylamino bedeutet.

11. Verwendung gemäss einen, der Ansprüche 1 bis 10, dadurch gekennzeichnet, dass $R_2$ Sulfo bedeutet.

12. Verwendung gemäss Anspruch 1 von Verbindungen der Formel

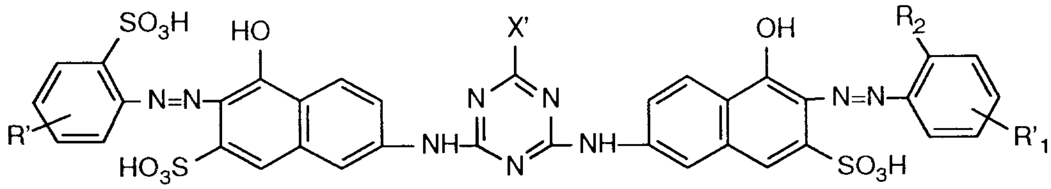

(1a),

worin R' und R'1 unabhängig voneinander je Wasserstoff, Methyl, Ethyl, Methoxy, Ethoxy, Acetylamino, Hydroxyacetylamino, Propionylamino oder Benzoylamino bedeuten, $R_2$ Wasserstoff oder Sulfo ist und X' für Hydroxy, Chlor, Amino, Phenylamino, o-, m- oder p-Methoxyphenylamino, o-, m- oder p-Methylphenylamino, o-, m- oder p-Sulfophenylamino, o-, m- oder p- Chlorphenylamino oder 3,4-Dichlorphenylamino steht, zum Färben von Leder.

13. Verwendung gemäss Anspruch 1 von Verbindungen der Formel

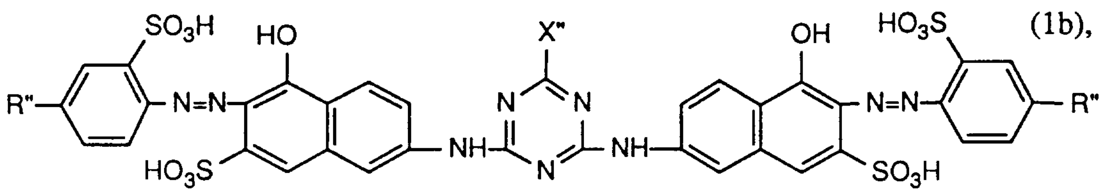

(1b),

worin R" Methyl, Methoxy, Ethoxy, Acetylamino, Bropionylamino oder Benzoylamino und X" Chlor, Phenylamino oder o-, m- oder p-Methoxyphenylamino bedeuten.

14. Verwendung gemäss Anspruch 13, dadurch gekennzeichnet, dass R" Methoxy bedeutet.

15. Verbindungen der Formel (1) gemäss Anspruch 1, worin X gegebenenfalls substituiertes Phenylamino bedeutet.

16. Verbindungen der Formel (1b) gemäss Anspruch 13, worin X" Phenylamino oder o-, m- oder p-Methoxyphenylamino ist.

17. Verfahren zum Färben von Leder, dadurch gekennzeichnet, dass man eine Verbindung der Formel (1) gemäss Anspruch 1 verwendet.

## Claims

1. The use of a compound of the formula

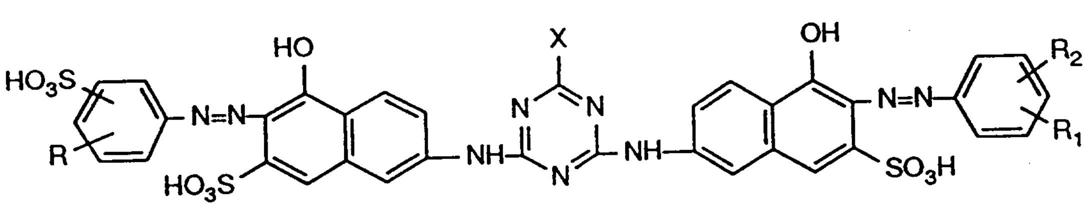

(1),

in which R and $R_1$ independently of one another are hydrogen, $C_1$-$C_4$alkyl, $C_1$-$C_4$alkoxy, unsubstituted or substituted $C_2$-$C_4$alkanoylamino or substituted or unsubstituted benzoylamino, $R_2$ is hydrogen or sulfo and X is hydroxy, $C_1$-$C_4$alkoxy, $C_1$-$C_4$alkylthio, amino, cyclohexylamino, morpholino, halogen or substituted or unsubstituted phenylamino or N-$C_1$-$C_4$alkyl-N-phenylamino, for the dyeing of leather.

**2.** The use according to claim 1, wherein R and $R_1$ independently of one another are each hydrogen, $C_1$-$C_4$alkoxy, methyl, ethyl, unsubstituted or hydroxy-substituted acetylamino, propionylamino or n- or iso-butyrylamino or benzoylamino which is unsubstituted or substituted by methyl, methoxy, chlorine, sulfamoyl and/or sulfo.

**3.** The use according to either claim 1 or claim 2, wherein R and $R_1$ independently of one another are each hydrogen, methyl, ethyl, methoxy, ethoxy, acetylamino, hydroxyacetylamino, propionylamino or benzoylamino.

**4.** The use according to any one of claims 1 to 3, wherein R and $R_1$ are each methyl, methoxy, ethoxy, acetylamino, propionylamino or benzoylamino.

**5.** The use according to any one of claims 1 to 4, wherein R and $R_1$ are each acetylamino or methoxy.

**6.** The use according to any one of claims 1 to 5, wherein R and $R_1$ are each methoxy.

**7.** The use according to any one of claims 1 to 6, wherein X is fluorine, chlorine, bromine, phenylamino or N-$C_1$-$C_4$alkyl-N-phenylamino each of which is unsubstituted or substituted in the phenyl moiety by $C_1$-$C_4$alkyl, $C_1$-$C_4$alkoxy, carboxy, sulfo, sulfamoyl, N-mono- or N,N-di-$C_1$-$C_4$alkylsulfamoyl and/or halogen, or is hydroxy, methoxy, ethoxy, n- or iso-propoxy, methylthio, ethylthio, amino or morpholino.

**8.** The use according to any one of claims 1 to 6, wherein X is hydroxy, methoxy, ethoxy, n- or iso-propoxy, chlorine, methylthio, ethylthio, amino, phenylamino, o-, m- or p-methoxyphenylamino, o-, m- or p-methylphenylamino, o-, m- or p-sulfophenylamino, o-, m- or p-chlorophenylamino, 3,4-dichlorophenylamino, N-ethyl-N-phenylamino, N-methyl-N-phenylamino or morpholino.

**9.** The use according to any one of claims 1 to 6, wherein X is hydroxy, chlorine, amino, phenylamino, o-, m- or p-methoxyphenylamino, o-, m- or p-methylphenylamino, o-, m- or p-sulfophenylamino, o-, m- or p-chlorophenylamino or 3,4-dichlorophenylamino.

**10.** The use according to any one of claims 1 to 6, wherein X is chlorine, phenylamino or o-, m- or p-methoxyphenylamino.

**11.** The use according to any one of claims 1 to 10, wherein $R_2$ is sulfo.

**12.** The use according to claim 1 of a compound of the formula

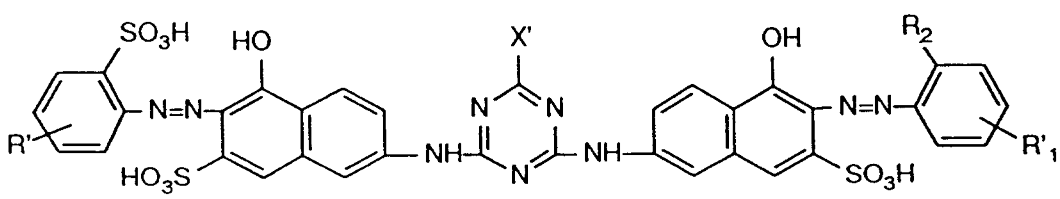 (1a),

in which R' and $R'_1$ independently of one another are each hydrogen, methyl, ethyl, methoxy, ethoxy, acetylamino, hydroxyacetylamino, propionylamino or benzoylamino, $R_2$ is hydrogen or sulfo and X' is hydroxy, chlorine, amino, phenylamino, o-, m- or p-methoxyphenylamino, o-, m- or p-methylphenylamino, o-, m- or p-sulfophenylamino, o-, m- or p-chlorophenylamino or 3,4-dichlorophenylamino, for dyeing leather.

13. The use according to claim 1 of a compound of the formula

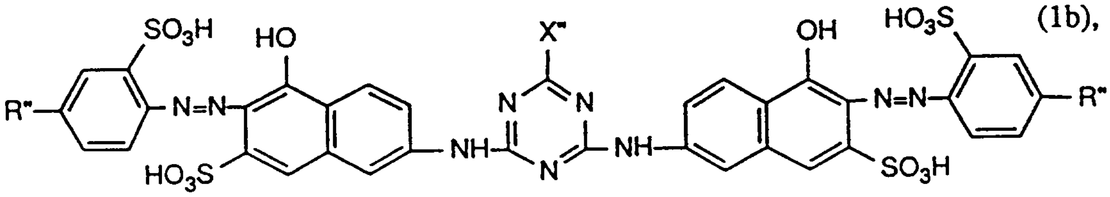

(1b),

in which R" is methyl, methoxy, ethoxy, acetylamino, propionylamino or benzoylamino and X" is chlorine, phenylamino or o-, m- or p-methoxyphenylamino.

14. The use according to claim 13, wherein R" is methoxy.

15. A compound of the formula (1) according to claim 1, in which X is unsubstituted or substituted phenylamino.

16. A compound of the formula (1b) according to claim 13, in which X" is phenylamino or o-, m- or p-methoxyphenylamino.

17. A process for dyeing leather, which comprises using a compound of the formula (1) according to claim 1.

## Revendications

1. Utilisation pour la teinture du cuir de composés de formule :

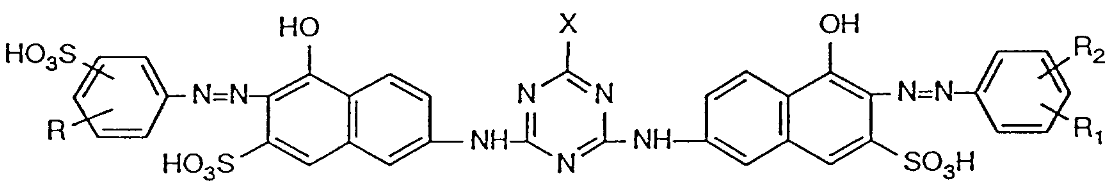

(1),

dans laquelle R et $R_1$, indépendamment l'un de l'autre, désignent un atome d'hydrogène, un groupe alkyle en $C_1C_4$, un groupe alcoxy en $C_1$-$C_4$, un groupe (alcanoyle en $C_2$-$C_4$)amino pouvant être substitué ou un groupe benzoylamino pouvant être substitué; $R_2$ représente un atome d'hydrogène ou un groupe sulfo, et X représente un groupe hydroxy, alcoxy en $C_1$-$C_4$, (alkyle en $C_1$-$C_4$)thio, amino, cyclohexylamino, morpholino, un atome d'halogène ou un groupe phénylamino pouvant être substitué ou un groupe N-(alkyle en $C_1$-$C_4$)N-phénylamino pouvant être substitué.

2. Utilisation selon la revendication 1, caractérisée en ce que R et $R_1$, indépendamment l'un de l'autre, représentent chacun un atome d'hydrogène, un groupe alcoxy en $C_1$-$C_4$, méthyle, éthyle, un groupe acétylamino, propionylamino, n-butyrylamino, iso-butyrylamino non substitué ou substitué par hydroxy, ou bien un groupe benzoylamino non substitué ou bien substitué par méthyle, méthoxy, chlore, sulfamoyle et/ou sulfo.

3. Utilisation selon la revendication 1 ou 2, caractérisée en ce que R et $R_1$, indépendamment l'un de l'autre, représentent chacun un atome d'hydrogène, un groupe méthyle, éthyle, méthoxy, éthoxy, acétylamino, hydroxyacétylamino, propionylamino ou benzoylamino.

4. Utilisation selon l'une des revendications 1 à 3, caractérisée en ce que R et $R_1$ représentent chacun un groupe méthyle, méthoxy, éthoxy, acétylamino, propionylamino ou benzoylamino.

5. Utilisation selon l'une des revendications 1 à 4, caractérisée en ce que R et $R_1$ représentent chacun un groupe acétylamino ou méthoxy.

6. Utilisation selon l'une des revendications 1 à 5, caractérisée en ce que R et $R_1$ représentent chacun un groupe méthoxy.

7. Utilisation selon l'une des revendications 1 à 6, caractérisée en ce que X représente un atome de fluor, de chlore ou de brome, ou bien un groupe phénylamino ou N-(alkyle en $C_1$-$C_4$)N-phénylamino, non substitué ou dont la partie phényle est substituée par un groupe alkyle en $C_1$-$C_4$, alcoxy en $C_1$-$C_4$, carboxy, sulfo, sulfamoyle, N-mono(alkyle en $C_1$-$C_4$)sulfamoyle ou N,N-di(alkyle en $C_1$-$C_4$)sulfamoyle et/ou halogène, hydroxy, méthoxy, éthoxy, n-propoxy, iso-propoxy, méthylthio, éthylthio, amino ou morpholino.

8. Utilisation selon l'une des revendications 1 à 6, caractérisée en ce que X représente un groupe hydroxy, méthoxy, éthoxy, n-propoxy, iso-propoxy, chlore, méthylthio, éthylthio, amino, phénylamino, o-, m- ou p-méthoxyphénylamino, o-, m- ou p-méthylphénylamino, o-, m- ou p-sulfophénylamino, o-, m- ou p-chlorophénylamino, 3,4-dichlorophénylamino, N-éthyl-N-phénylamino, N-méthyl-N-phénylamino ou bien morpholino.

9. Utilisation selon l'une des revendications 1 à 6, caractérisée en ce que X représente hydroxy, chlore, amino, phénylamino, o-, m- ou p-méthoxyphénylamino, o-, m- ou p-méthylphénylamino, o-, m- ou p-sulfophénylamino, o-, m- ou p-chlorophénylamino ou bien 3,4-dichlorophénylamino.

10. Utilisation selon l'une des revendications 1 à 6, caractérisée en ce que X représente un atome de chlore ou un groupe phénylamino ou bien un groupe o-, m- ou p-méthoxyphénylamino.

11. Utilisation selon l'une des revendications 1 à 10, caractérisée en ce que $R_2$ représente un groupe sulfo.

12. Utilisation selon la revendication 1 , pour la teinture du cuir, de composés de formule :

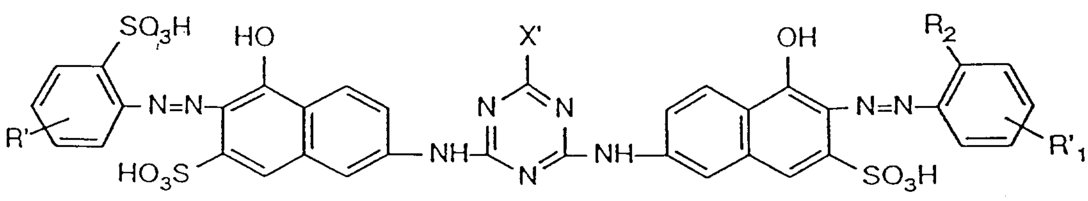

(1a),

dans laquelle R' et $R'_1$, indépendamment l'un de l'autre, représentent chacun un atome d'hydrogène, un groupe méthyle, éthyle, méthoxy, éthoxy, acétylamino, hydroxyacétylamino, propionylamino ou benzoylamino, $R_2$ représente un atome d'hydrogène ou un groupe sulfo et X' représente un atome de chlore ou un groupe hydroxy, amino, phénylamino, o-, m- ou p-méthoxyphénylamino, o-, m- ou p-méthylphénylamino, o-, m- ou p-sulfophénylamino, o-, m- ou p-chlorophénylamino ou bien 3,4-dichlorophénylamino.

13. Utilisation selon la revendication 11, des composés de formule :

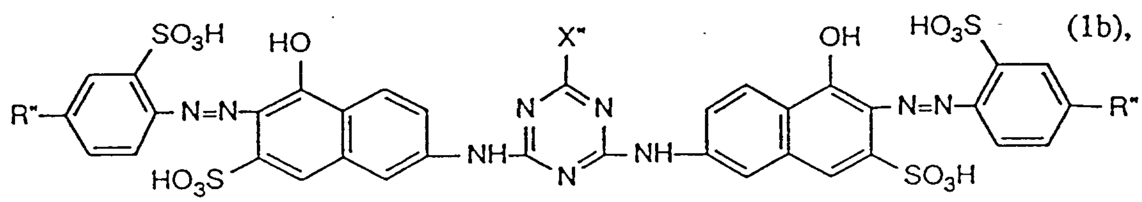

(1b),

dans laquelle R" représente un groupe méthyle, méthoxy, éthoxy, acétylamino, propionylamino ou

benzoylamino, et X'' représente un atome de chlore, un groupe phénylamino ou un groupe o-, m- ou p-méthoxyphénylamino.

**14.** Utilisation selon la revendication 13, caractérisée en ce que R'' représente un groupe méthoxy.

**15.** Composés de formule (1), selon la revendication 1, dans laquelle X représente un groupe phénylamino pouvant être substitué.

**16.** Composés de formule (1b), selon la revendication 13, dans laquelle X'' représente un groupe phénylamino, o-, m- ou p-méthoxyphénylamino.

**17.** Procédé de teinture du cuir, caractérisé en ce qu'on utilise un composé de formule (1), selon la revendication 1.